# EUROPEAN PATENT APPLICATION

(11) **EP 3 438 463 A1**
(43) Date of publication of application: **06.02.2019**
(21) Application number: 17898028.0
(22) Date of filing: 14.12.2017
(51) Int. Cl.: F04D 29/58, F04D 17/10, F04D 29/00, F04D 29/28, F04D 29/44, H02K 7/14, H02K 9/19

(54) **CENTRIFUGAL PUMP**

(30) Priority: 22.02.2017 JP 2017030913
(71) Applicant: Shinano Kenshi Kabushiki Kaisha, Nagano 386-0498 (JP)
(72) Inventor: MATSUI, Yoshitaka, Ueda-shi Nagano 386-0498 (JP)
(74) Representative: Mewburn Ellis LLP
(86) International application number: PCT/JP2017/044883
(87) International publication number: WO 2018/154931

(57) **Abstract**

A centrifugal pump is provided which is capable of achieving thinning thereof with use of a radial gap-type motor, is smaller in the flow path loss from a suction flow path to a discharge flow path, and is capable of efficiently dissipating heat generated by a coil without inclusion of an extra cooling structure.

A rotor (13) and a pump body (2) are arranged in a concentric manner around a rotor shaft (7), and a suction side scroll flow path (14) and a discharge side scroll flow path (15) formed in the pump body (2) communicate with each other via central flow paths (10b), (10a) formed in the pump body (2) and an impeller (9).

## Description

### Technical Field

The present invention relates to a centrifugal pump which circulates, for example, a cooling fluid.

### Background Art

Conventional electronic apparatuses such as notebook personal computers are provided with high-heat-generating electronic components, such as an LED, a CPU, and an MPU, and a centrifugal pump is used for fluid circulation to cool a control circuit equipped with these components.

Moreover, to promote miniaturization and thinning of an electronic apparatus, it is also necessary to achieve thinning of a centrifugal pump. For that purpose, a centrifugal pump in which a suction side flow path for fluid, through which a fluid is usually suctioned from the center in the axial direction of an impeller, is pressurized while being scrolled, and is then discharged from the circumferential direction thereof, is formed to be bent by 90° in such a way as to be parallel to a discharge side flow path has been proposed (see PTL 1).

Moreover, since a suction flow path is formed in a casing, the thickness of the casing becomes thick, and, therefore, a centrifugal pump in which an axial gap-type motor is employed instead of a radial gap-type motor as a motor which rotationally drives an impeller has also been proposed (see PTL 2).

### Citation List

### Patent Literature

PTL 1: JP-A-2001-132699
PTL 2: JP-A-2009-8055

### Summary of Invention

### Technical Problem

While thinning can be achieved in a centrifugal pump in which the above-mentioned axial gap-type motor is employed, the suction side flow path forms flow paths orthogonal inside a base, is not seen uniform in the flow path cross-sectional area, and has a configuration with a high degree of flow path loss. In particular, since a back yoke equipped with a coil configuring the axial gap-type motor is formed by being molded inside the base, the thickness of the base is apt to become thick, so that the suction side flow path cross-sectional area formed in the base cannot be secured wide.

Moreover, since the suction side flow path flows into a pump chamber side through the inside of a hollow fixed shaft of the impeller 4, it is necessary to form the suction side flow path across the back yoke in the radial direction. Accordingly, since it is necessary to equip the back yoke with an intermittent portion, a coli cannot be located in such a portion, so that the flux content decreases, the effective magnetic flux acting on a rotor also decreases, and the motor characteristic is also apt to deteriorate.

Furthermore, since the suction side flow path is formed while avoiding the coil, the heat generated by the coil cannot be efficiently dissipated. If a cooling structure is additionally provided, thinning cannot be achieved and manufacturing costs also increase.

### Solution to Problem

In response to the above issue, it is an object of the present invention to provide a centrifugal pump which is capable of achieving thinning thereof with use of a radial gap-type motor, is smaller in the flow path loss from a suction flow path to a discharge flow path, and is capable of efficiently dissipating heat generated by a coil without inclusion of an extra cooling structure.

In order to attain the above-mentioned object, the present invention has the following configuration.

A centrifugal pump that causes a radial gap-type electric motor to rotationally drive an impeller to suction a fluid from an outer circumference side of a pump body into a pump chamber and discharge the fluid from the pump chamber via the outer circumference side of the pump body, the centrifugal pump including a base portion, a rotor shaft having at least one end prevented from dropping off and supported by the base portion in a standing manner, the impeller rotatably attached to the rotor shaft, a rotor including a rotor magnet mounted to the impeller in a concentric fashion, and the pump body in which a suction side scroll flow path that suctions the fluid from an outer circumference side of the impeller toward a radially central portion thereof, a discharge side scroll flow path that discharges the fluid from the radially central portion of the impeller toward the outer circumference side thereof, and a stator including a stator core having stator pole teeth formed and placed to face radially the rotor magnet are integrally mounted, wherein the rotor and the pump body are placed in a concentric fashion around the rotor shaft, and the suction side scroll flow path and the discharge side scroll flow path formed in the pump body communicate with each other via central flow paths formed in the pump body and the impeller.

According to the above-mentioned configuration of the centrifugal pump, since the suction side scroll flow path and the discharge side scroll flow path formed in the pump body communicate with each other via the central flow paths formed in the pump body and the impeller, thinning can be achieved even when a radial gap-type motor is used. Moreover, since a flow path loss leading from the suction side scroll flow path to the discharge side scroll flow path is small and the fluid passes in such a manner that these surround both end surface sides in the axial direction of the stator core, the heat generated by the coil can be efficiently dissipated.

It is desirable that the suction side scroll flow path include a suction hole provided on an outer circumference surface of the pump body and a suction side scroll groove partitioned in such a manner that the fluid entering from the suction hole is guided toward a suction side central hole while revolving in a circumferential direction and formed in such a manner that a groove depth thereof becomes shallower as the groove depth goes from the suction hole toward the suction side central hole.

With this, since the fluid suctioned from the suction hole into the pump body is guided toward the suction side central hole while revolving along the suction side scroll groove and the groove depth becomes gradually shallower as the groove depth goes toward the suction side central hole, the fluid is guided to the impeller side in the axial direction via the central flow path. At this time, the height of the pump chamber is unnecessary, and no loss occurs in the flow path even if thinning is achieved.

It is desirable that the suction side scroll flow path be formed between the suction side scroll groove formed on one end surface in the axial direction of the pump body and another base portion superposed on the one end surface in the axial direction.

With this, the height in the axial direction of the pump body can be restricted, thinning can be promoted, and assembling can be performed by superposing the pump body on the base portion, so that good assembly productivity can also be obtained.

It is desirable that the discharge side scroll flow path include a discharge side central hole formed in such a way as to communicate with the suction side central hole via the central flow paths and a discharge side scroll groove partitioned in such a manner that the fluid is guided from the discharge side central hole to a discharge hole provided on an outer circumference surface of the pump body while revolving and formed in such a manner that a groove depth thereof becomes deeper as the groove depth goes from the discharge side central hole toward the discharge hole.

With this, the fluid suctioned from the central flow path to the discharge side central hole is pressurized by rotation of the impeller, is guided along the discharge side scroll groove, in which the groove depth thereof becomes gradually deeper as the groove depth goes from the discharge side central hole toward the discharge hole, and is then discharged from a discharge port. At this time, the height of the pump chamber is unnecessary, and no loss occurs in the flow path even if thinning is achieved.

It is desirable that the discharge side scroll flow path be formed between the discharge side scroll groove formed on the other end surface in the axial direction of the pump body and one base portion superposed on the other end surface in the axial direction.

With this, the height in the axial direction of the pump body can be restricted, thinning can be promoted, and assembling can be performed by superposing the pump body on the base portion, so that good assembly productivity can also be obtained.

It is desirable that, on end surfaces in the axial direction of the pump body, a shallow groove and a deep groove be placed while being combined such that groove bottom portions thereof are close to each other in such a manner that a flow velocity of the fluid becomes uniform in the suction side scroll flow path and the discharge side scroll flow path.

With this, since a shallow groove and a deep groove are placed while being combined such that groove bottom portions thereof are close to each other in such a manner that the flow velocity of the fluid becomes uniform in the suction side scroll groove and the discharge side scroll groove formed while being radially partitioned in the pump chamber, the volume of the pump chamber can be prevented from increasing in the axial direction, thinning can be promoted, and the flow path loss leading from a suction port to a discharge port can be reduced as much as possible, so that the pump performance can be maintained.

The impeller can include an annular portion, to which the rotor is mounted, and a blade portion, which is mounted to the rotor shaft, the annular portion and the blade portion being molded integrally with each other.

With this, the rotor and the impeller can be concurrently mounted to the rotor shaft, and the location in the axial direction can be made compact.

### Advantageous Effects of Invention

A centrifugal pump which is capable of achieving thinning thereof with use of a radial gap-type motor, is smaller in the flow path loss from a suction flow path to a discharge flow path, and is capable of efficiently dissipating heat generated by a coil without inclusion of an extra cooling structure can be provided.

### Brief Description of Drawings

Fig. 1 is a perspective view of a centrifugal pump.
Fig. 2 is a sectional view in the direction of arrow X-X in Fig. 1.
Figs. 3A and 3B are a top half view obtained by seeing through a base portion and a sectional view in the direction of arrow Y-Y in Fig. 1.
Figs. 4A and 4B are a suction side perspective view and a discharge side perspective view of a pump body.

### Description of Embodiments

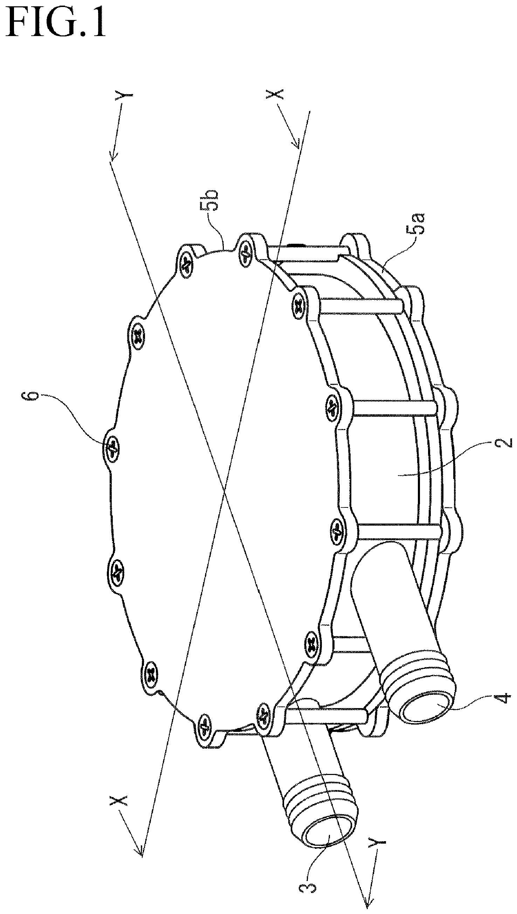

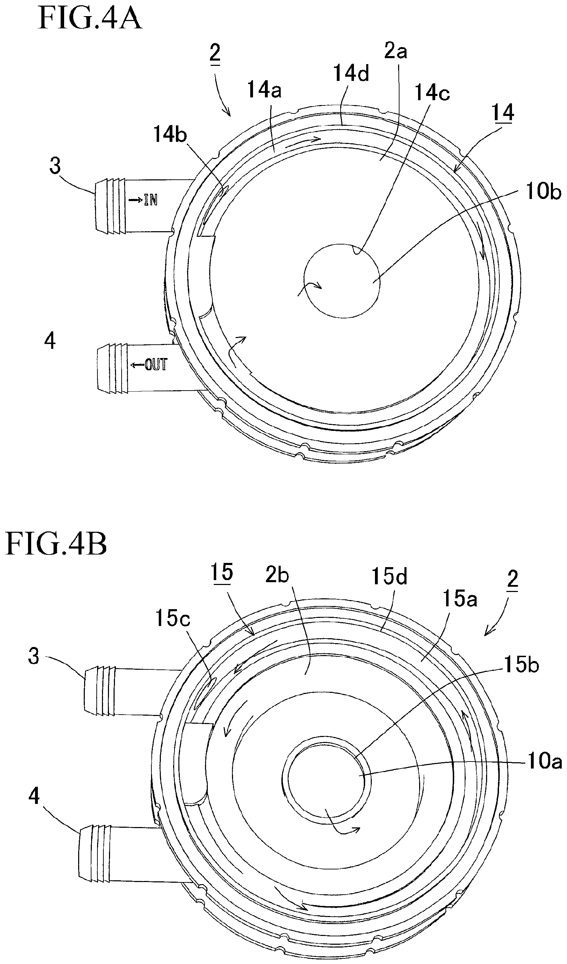

Hereinafter, an embodiment of a centrifugal pump according to the present invention will be described with reference to the accompanying drawings illustrated in Fig. 1 to Figs. 4A and 4B. In the present embodiment, a centrifugal pump which rotationally drives an impeller using an inner rotor-type motor of the radial gap type is described as an example. A DC brushless motor is used as the inner rotor-type motor.

In Fig. 1, a centrifugal pump 1 causes a radial gap-type electric motor to rotationally drive an impeller 9 to suction a fluid from a suction port 3 formed on an outer circumference of a pump body 2 and discharge the fluid from a discharge port 4 formed on the outer circumference of the pump body 2.

A pair of plate-like base portions 5a, 5b is superposed on the pump body 2, which is molded with resin, in such a way as to sandwich both end surfaces thereof, and fixing bolts 6 are screw-fitted into outer periphery portions of the base portions 5a, 5b, which face each other via the pump body 2, so that the base portions 5a, 5b and the pump body 2 are integrally mounted.

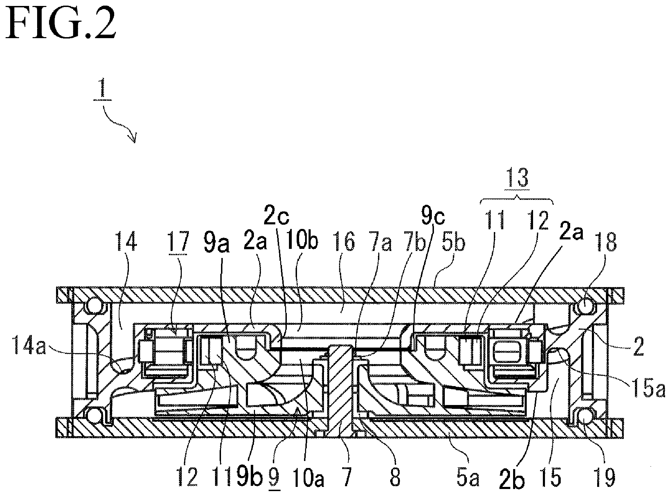

Next, a structure of the centrifugal pump 1 is described in detail with reference to Fig. 2.

One end of a rotor shaft 7 is supported and fixed in a standing manner at the base portion 5a, which is one of the pair of base portions 5a, 5b. The impeller 9 is integrally mounted to the rotor shaft 7 via a sliding bearing 8. The impeller 9 is prevented from dropping off by a C-type retaining ring 7a via a thrust receiver 7b at the other end of the rotor shaft 7, thus being mounted integrally with the rotor shaft 7.

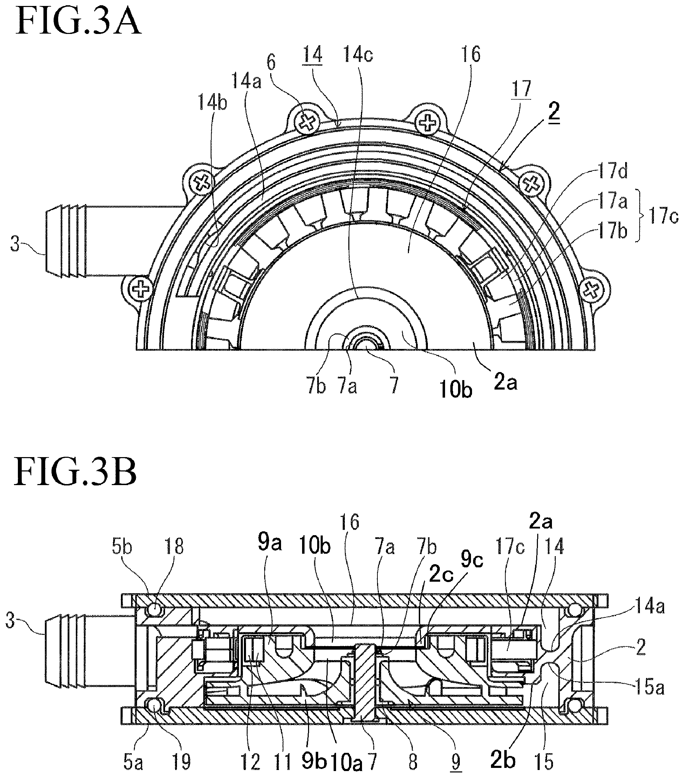

In Figs. 2 and 3B, a rotor 13 is integrally mounted to the impeller 9. The impeller 9 includes an annular portion 9a, which forms a central flow path 10a, and a blade portion 9b, which conveys the fluid from the central portion toward the outer circumference side, the annular portion 9a and the blade portion 9b being molded integrally with each other. An annular back yoke 11 is integrally mounted to the outer circumference surface of the annular portion 9a and a rotor magnet 12 is integrally mounted to the outer circumference side thereof via, for example, adhesion or insert molding. With this, the rotor 13 and the impeller 9 can be concurrently mounted to the rotor shaft 7 in a concentric fashion, and the location in the axial direction can be made compact. The rotor magnet 12 can be a magnet previously molded in an annular shape or a magnet divided into a plurality of segments. Moreover, a stepped portion 9c is formed at a suction side opening portion of the annular portion 9a. Furthermore, in a case where the impeller 9 and the rotor 13 are molded integrally with each other, for example, in view of durability or the like, it is desirable that those be integrally molded with, for example, polyphenylene sulfide (PPS).

Moreover, a central flow path 10a (a hollow hole) is formed along the axial direction around a connection portion of the impeller 9 with the rotor shaft 7. This central flow path 10a is formed in such a way as to communicate with a central flow path 10b formed in the pump body 2, as described below. More specifically, a suction side scroll flow path 14, which is used to suction the fluid from the outer circumference side of the impeller 9 toward the radially central portion thereof, and a discharge side scroll flow path 15, which is used to discharge the fluid from the central portion of the impeller 9 toward the outer circumference side thereof, are arranged to communicate with each other via the central flow paths 10a, 10b.

Next, a structure of the pump body 2 is described.

In Fig. 2, the suction side scroll flow path 14, which is used to suction the fluid from the outer circumference side of the impeller 9 toward the central portion of a pump chamber 16 in the radial direction, is formed at one end portion 2a in the axial direction of the pump body 2. Specifically, the suction side scroll flow path 14 is formed between a suction side scroll groove (recessed portion) 14a, which is formed at the one end portion 2a in the axial direction of the pump body 2, and the base portion 5b, which is mounted to be superposed on the end surface in the axial direction in such a way as to cover the suction side scroll groove 14a. Moreover, the one end portion 2a in the axial direction extends to the radially inner side in such a way as to cover the annular portion 9a of the impeller 9, and a lip portion 2c (a return structure), which is formed in an L-shaped manner from that end portion, is formed. The lip portion 2c is located in such a way as to mesh with the stepped portion 9c of the annular portion 9a. The inner circumference surface of the lip portion 2c forms the central flow path 10b, which communicates with the central flow path 10a. With this, the fluid can be prevented from flowing back from a gap between the impeller 9 and the pump body 2 toward the central flow path 10a.

Moreover, in Fig. 2, the discharge side scroll flow path 15, which is used to discharge the fluid from the central portion of the impeller 9 toward the outer circumference side thereof in the radial direction, is formed at the other end portion 2b in the axial direction of the pump body 2. Specifically, the discharge side scroll flow path 15 is formed between a discharge side scroll groove (recessed portion) 15a, which is formed at the other end portion 2b in the axial direction of the pump body 2, and the base portion 5a. The pump chamber 16, which is provided in the pump body 2, is formed by causing the suction side scroll flow path 14 and the discharge side scroll flow path 15 to communicate with each other via the central flow paths 10a, 10b. Furthermore, the suction side scroll flow path 14 and the discharge side scroll flow path 15 do not necessarily need to be formed between the end portion in the axial direction of the pump body 2 and the base portion, and, instead of the base portion, another member can be employed.

Moreover, as illustrated in Fig. 3A, a stator 17 is mounted to the pump body 2. The stator 17 includes a stator core 17c in which stator pole teeth 17b are radially provided in a protruding manner from a core back portion 17a formed in an annular manner toward the radially inner side. A coil 17d is wound around each stator pole tooth 17b.

As illustrated in Figs. 3A and 3B, the pump body 2 is mounted to the base portions 5a, 5b in such a manner that the stator pole teeth 17b face the rotor magnet 12 in the radial direction, so that the suction side scroll flow path 14 and the discharge side scroll flow path 15 communicate with each other via the central flow paths 10b, 10a formed in the impeller 9.

According to the above-described configuration of the centrifugal pump 1, since the suction side scroll flow path 14, which is used to suction the fluid from the outer circumference side of the impeller 9 (annular portion 9a) toward the radially central portion thereof, and the discharge side scroll flow path 15, which is used to discharge the fluid from the central portion of the impeller 9 (blade portion 9b) toward the outer circumference side thereof, communicate with each other via the central flow paths 10b, 10a formed in the pump body 2 and the impeller 9, thinning can be achieved even if a radial gap-type motor is used. Moreover, since the flow path loss leading from the suction side scroll flow path 14 to the discharge side scroll flow path 15 is small and the fluid passes in such a manner that these surround both end surface sides in the axial direction of the stator core 17c, the heat generated by the coil 17d can be efficiently dissipated.

Next, an internal configuration of the pump body 2 is described with reference to Figs. 4A and 4B.

Fig. 4A is a perspective view illustrating the one end portion 2a in the axial direction of the pump body 2, in which the suction side scroll flow path 14 is formed. The fluid, which has entered from a suction hole 14b provided on the outer circumference surface of the pump body 2, is guided toward a suction side central hole 14c while revolving in the circumferential direction. A suction side scroll groove 14a is partitioned by a partition wall 14d, and is formed in a revolving shape in such a manner that the groove depth thereof becomes gradually shallower as the groove depth goes from the suction hole 14b toward the suction side central hole 14c (the lip portion 2c: see Fig. 3B).

With this, the fluid, which has been suctioned into the pump chamber 16 via the suction hole 14b, is guided toward the suction side central hole 14c while revolving along the suction side scroll groove 14a. At this time, since the groove depth becomes gradually shallower as the groove depth goes toward the suction side central hole 14c, the fluid is guided through the central flow path 10b to the central flow path 10a on the side of the impeller 9 in the axial direction. While the fluid moves in a revolving manner in the pump body 2, the height of the pump chamber 16 is unnecessary, so that no loss occurs in the flow path even if thinning is achieved.

Fig. 5B is a perspective view illustrating the other end portion 2b in the axial direction of the pump body 2, in which the discharge side scroll flow path 15 is formed. The fluid, which has entered from a discharge side central hole 15b through the central flow path 10a, is guided to a discharge hole 15c provided on the outer circumference surface of the pump body 2 while revolving in the circumferential direction along the blade portion 9b of the impeller 9. The discharge side scroll groove 15a is partitioned by a partition wall 15d, and is formed in a revolving shape in such a manner that the groove depth thereof becomes gradually deeper as the groove depth goes from the discharge side central hole 15b toward the discharge hole 15c.

With this, the fluid, which has flowed from the central flow path 10a into the discharge side central hole 15b, is pressurized by rotation of the impeller 9 (the blade portion 9b) and is guided toward the outer circumference surface of the pump body 2. More specifically, the pressurized fluid is conveyed while revolving along the discharge side scroll groove 15a, the groove depth of which becomes gradually deeper as the groove depth goes from the discharge side central hole 15b toward the discharge hole 15c, and is then discharged from the discharge port 4. At this time, while the fluid moves in a revolving manner in the pump body 2, the height of the pump chamber 16 is unnecessary, so that no loss occurs in the flow path even if thinning is achieved.

It is desirable that, on the end surface in the axial direction of the pump body 2, the suction side scroll groove 14a and the discharge side scroll groove 15a be formed in such a way as to be symmetric with respect to a point in such a manner that the flow velocity of the fluid flowing in these grooves becomes uniform. Specifically, as illustrated in Figs. 2 and 3B, the suction side scroll groove 14a and the discharge side scroll groove 15a are formed in such a manner that a shallow groove and a deep groove are combined such that the groove bottom portions thereof are close to each other on the end surfaces in the axial direction of the pump body 2.

In this way, since the shallow groove and the deep groove are formed in combination on the end surfaces in the axial direction of the pump body 2 in such a manner that the flow velocity of the fluid flowing in the suction side scroll groove 14a and the discharge side scroll groove 15a, which are formed by partitioning in the radial direction in the pump chamber 16, becomes uniform, there is no increase in the volume of the pump chamber 16 in the axial direction, thinning can be promoted, and the flow path loss leading from the suction port 3 to the discharge port 4 can reduced as much as possible, so that the pump performance can be maintained.

In Fig. 1, it is desirable that annular seal members 18, 19 (for example, O rings) be provided between the pump body 2 and a pair of base portions 5a, 5b, which are superposed on the pump body 2. With this, the sealing performance for fluid of the suction side scroll flow path 14 and the discharge side scroll flow path 15 can be enhanced.

Here, an example of a fluid conveying operation of the centrifugal pump 1 is described.

In Fig. 2, when the electric motor is activated, the impeller 9, which is integrally mounted to the rotor shaft 8, is rotationally driven.

With this, the fluid is suctioned from the suction port 3 through the suction side scroll flow path 14, and the fluid suctioned from the suction hole 14b into the pump chamber 16 is guided to the suction side scroll groove 14a and is then conveyed toward the suction side central hole 14c while revolving (see Fig. 4A).

Then, the fluid is conveyed from the suction side central hole 14c to the discharge side central hole 15b through the central flow paths 10a, 10b (see Fig. 3B). The fluid, which has flowed from the central flow path 10a into the discharge side central hole 15b, is guided toward the outer circumference surface of the pump body 2 while revolving along the discharge side scroll groove 15a by rotation of the impeller 9, is pressurized toward the discharge hole 15c from the discharge side central hole 15b through the discharge side scroll flow path 15, and is then discharged from the discharge port 4 (see Fig. 4B).

As described above, the centrifugal pump 1, in which thinning is achieved with use of a radial gap-type electric motor, the flow path loss leading from the suction side scroll flow path 14 to the discharge side scroll flow path 15 is small, and the heat generated by the coil 17d can be efficiently dissipated without inclusion of an extra cooling structure, can be provided.

In the above-described embodiment, the impeller 9, which is mounted in a concentric manner around the rotor shaft 8, includes the annular portion 9a and the blade portion 9b integrally molded with resin, but can be configured with separate components.

Moreover, while the rotor shaft 8 is fixed and the rotor 13 and the impeller 9 are configured to be rotated, the rotor 13 and the impeller 9 can be configured to be rotated integrally with the rotor shaft 8.

## Claims

1. A centrifugal pump that causes a radial gap-type electric motor to rotationally drive an impeller to suction a fluid from an outer circumference side of a pump body into a pump chamber and discharge the fluid from the pump chamber via the outer circumference side of the pump body, the centrifugal pump comprising:
a base portion;
a rotor shaft having at least one end prevented from dropping off and supported by the base portion in a standing manner;
the impeller rotatably attached to the rotor shaft;
a rotor including a rotor magnet mounted to the impeller in a concentric fashion; and
the pump body in which a suction side scroll flow path that suctions the fluid from an outer circumference side of the impeller toward a radially central portion thereof, a discharge side scroll flow path that discharges the fluid from the radially central portion of the impeller toward the outer circumference side thereof, and a stator including a stator core having stator pole teeth formed and placed to face radially the rotor magnet are integrally mounted,
wherein the rotor and the pump body are placed in a concentric fashion around the rotor shaft, and the suction side scroll flow path and the discharge side scroll flow path formed in the pump body communicate with each other via central flow paths formed in the pump body and the impeller.

2. The centrifugal pump according to claim 1, wherein the suction side scroll flow path includes a suction hole provided on an outer circumference surface of the pump body and a suction side scroll groove partitioned in such a manner that the fluid entering from the suction hole is guided toward a suction side central hole while revolving in a circumferential direction and formed in such a manner that a groove depth thereof becomes shallower as the groove depth goes from the suction hole toward the suction side central hole.

3. The centrifugal pump according to claim 2, wherein the suction side scroll flow path is formed between the suction side scroll groove formed on one end portion in an axial direction of the pump body and a base portion superposed on the one end portion in the axial direction.

4. The centrifugal pump according to any one of claim 1 to claim 3, wherein the discharge side scroll flow path includes a discharge side central hole formed in such a way as to communicate with the suction side central hole via the central flow paths and a discharge side scroll groove partitioned in such a manner that the fluid is guided from the discharge side central hole to a discharge hole provided on an outer circumference surface of the pump body while revolving and formed in such a manner that a groove depth thereof becomes deeper as the groove depth goes from the discharge side central hole toward the discharge hole.

5. The centrifugal pump according to claim 4, wherein the discharge side scroll flow path is formed between the discharge side scroll groove formed on the other end portion in the axial direction of the pump body and a base portion superposed on the other end portion in the axial direction.

6. The centrifugal pump according to any one of claim 1 to claim 5, wherein, on end surfaces in the axial direction of the pump body, a shallow groove and a deep groove are placed while being combined such that groove bottom portions thereof are close to each other in such a manner that a flow velocity of the fluid becomes uniform in the suction side scroll flow path and the discharge side scroll flow path.

7. The centrifugal pump according to any one of claim 1 to claim 6, wherein the impeller includes an annular portion, to which the rotor is mounted, and a blade portion, which is mounted to the rotor shaft, the annular portion and the blade portion being molded integrally with each other.
